# EUROPÄISCHE PATENTSCHRIFT

(11) **EP 1 192 511 B1**
(45) Veröffentlichungstag und Bekanntmachung des Hinweises auf die Patenterteilung: **26.05.2004**
(21) Anmeldenummer: 00951209.6
(22) Anmeldetag: 16.06.2000
(51) Int. Cl.: G05B 19/042

(54) **SICHERHEITSBEZOGENES AUTOMATISIERUNGSBUSSYSTEM**
SECURITY-RELATED BUS AUTOMATION SYSTEM
SYSTEME DE BUS D'AUTOMATISATION A SECURITE ELEVEE

(30) Priorität: 17.06.1999 DE 19927635
(43) Veröffentlichungstag der Anmeldung: 03.04.2002
(73) Patentinhaber: Phoenix Contact GmbH & Co. KG, 32825 Blomberg (DE)
(72) Erfinder: MEYER-GRÄFE, Karsten, D-33161 Hövelhof (DE); KRESS, Wolfram, D-53721 Siegburg (DE)
(74) Vertreter: Herden, Andreas F.
(86) Internationale Anmeldenummer: PCT/DE2000/001901
(87) Internationale Veröffentlichungsnummer: WO 2000/079352

(56) Entgegenhaltungen:
- EP-A- 0 600 311
- EP-A- 0 770 942
- EP-A- 0 837 394
- DE-A- 19 510 470
- DE-A- 19 815 150
- US-A- 4 680 753
- MOHLENBEIN H: "INTERBUS-DEZENTRALE ECHTZEIT-PERIPHERIE FUER STANDARD-SPS-SYSTEME" ELEKTRIE,DD,VEB VERLAG TECHNIK. BERLIN, Bd. 44, Nr. 7, 1990, Seiten 244-249, XP000162759 ISSN: 0013-5399

## Beschreibung

Die Erfindung betrifft ein sicherheitsbezogenes Automatisierungsbudsystem nach dem Oberbegriff des Anspruchs 1 und ein Verfahren zum Betrieb eines derartigen Systems.

Steuer- und Datenübertragungsanlagen haben aufgrund des damit möglichen hohen Automatisierungsgrades eine herausragende Stellung nicht nur in der industriellen Fertigung erlangt. Derartige Automatisierungssysteme weisen im allgemeinen zumindest Abschnitte oder Komponenten auf, an welche erhöhte Anforderungen im Hinblick auf die Sicherheit zu stellen sind. Beispielsweise muß sichergestellt sein, daß bestimmte Maschinen innerhalb vorgegebener Betriebsparameter betrieben werden oder es muß verhindert werden, daß eine Maschine läuft, obwohl sich eine Person in deren Arbeitsbereich aufhält. Dazu ist aus der DE 198 15 150 A1 eine Sensoranordnung zur Überwachung eines Arbeitsgeerätes bekannt, welches in Abhängigkeit der Schaltzustände der Sensoren in Betrieb setzbar ist, wobei die Sensoren Slaves eines nach dem Master-Slave-Prinzip arbeitenden Bussystems bilden. Das Bussystem wird von einer den Master bildenden Steuereinheit gesteuert. Die Sensoren sind von Lichtschranken mit jeweils einem Sender und einem Empfänger gebildet, wobei jeder Sender Sendelichtstrahlen mit einer individuellen Kodierung an den zugeordneten Empfänger aussendet. An das Bussystem ist eine redundante Auswerteeinheit angeschlossen, welche fortlaufend die über das Bussystem übertragenen Signale abhört. Nur bei fehlerfreier Identifizierung der von den Empfängern über das Bussystem übertragenen Kodierungen wird das Arbeitsgerät in Betrieb gesetzt.

In dieser Hinsicht darf beispielsweise eine Drehmaschine nicht eine vorgegebene Drehzahl überschreiten oder sich nicht beim Betrieb eines Roboters eine Person im Aktionsradius des Roboters aufhalten. Weiterhin muß beim Betrieb eines Automatisierungssystems sichergestellt sein, daß bei einem Ausfall einer Komponente des Systems die Anlage nicht in einen undefinierten und damit nicht vorhersagbaren Zustand gerät.

Ein Ansatz für diese Problematik nach dem Stand der Technik besteht darin, insbesondere die sicherheitsrelevanten Komponenten des Systems mehrkanalig, d.h. redundant aufzubauen. Beispielsweise kann in einem Automatisierungsbussystem vorgesehen sein, Sicherheitsbuskomponenten, d.h. z.B. Busteilnehmer, die einer sicherheitsrelevanten Maschine zugeordnet sind, doppelt auszuführen. Gleichzeitig kann auch die zentrale Steuerung und der Bus mehrkanalig aufgebaut sein oder gar eine von der Prozeßsteuerung getrennte spezielle und unter Umständen redundant aufgebaute Sicherheitssteuerung zur Steuerung der sicherheitsrelevanten Komponenten vorgesehen sein. Diese Sicherheitssteuerung führt im wesentlichen die Verknüpfungen der sicherheitsbezogenen Eingangsinformationen durch und übermittelt daraufhin, beispielsweise über einen Automatisierungsbus, sicherheitsbezogene Verknüpfungsdaten an Ausgangskomponenten. Die Ausgangskomponenten ihrerseits bearbeiten die empfangenen Sicherheitsmaßnahmen und geben nach positiver Prüfung diese an die Peripherie aus. Darüber hinaus schalten sie ihre Ausgänge in einen sicheren Zustand, wenn sie einen Fehler feststellen oder innerhalb einer vorgegebenen Zeitdauer keine gültigen Daten mehr empfangen haben. In der EP 0 837 394 A2 wird beispielsweise ein ausfallsicheres serielles Bussystem offenbart, welches zwei Datenleitungen aufweist, an die an einem Ende ein zentraler Busteilnehmer und am anderen Ende ein aktiver Busteilnehmer angeschlossen sind. Der zentrale und der aktive Busteilnehmer senden Statusmeldungen auf den Bus, von denen die Busleitungen in den Busteilnehmern zwischen den beiden Enden physisch durchgeschleift sind. Bei Ausbleiben der Statusmeldungen oder Fehler anzeigenden Statusmeldungen versetzt der zentrale Busteilnehmer das Bussystem in einen Fail-Safe-Zustand.

Aus der EP 0 770 942 A2 ist ferner eine Anordnung zur Erfassung und/oder Verarbeitung von Signalen elektrischer Bauteile, sie sicherheitstechnische Zwecke oder Auflagen für Geräte oder Anlagen erfüllen, bekannt. Die Anordnung umfaßt dabei Bauteile, die jeweils mit wenigstens zwei Modulen verbunden sind. Die Module sind Teilnehmer im jeweiligen Bus, der ein zentrales Bus-Steuermodul enthält. Die Bus-Steuermodule sind mit wenigstens einem Vergleicher und/oder einer Prüfeinrichtung für auf den Bussen übertragene Signale verbunden. Der Vergleicher und/oder die Prüfeinrichtung steuert Bauelemente, durch deren Betätigung die Geräte oder Anlagen in einen Zustand versetzt werden, der wenigstens einer Sicherheitsvorgabe entspricht.

Der Einsatz von zwei Steuerungen im System, d.h. eine Prozeßsteuerung sowie der beschriebenen Sicherheitssteuerung hat jedoch einige Nachteile zur Folge. Gerade aufgrund steigender Anforderungen an die Reaktionszeit von Automatisierungssystemen muß ein derartiges System häufig auf Sicherheitsinseln aufgeteilt werden. Weiterhin treten insbesondere bei mehrkanaligen Steuerungssystemen Synchronisationsprobleme auf, welche trotz prinzipiell intakter Anlage zu Ausfällen oder gar Zerstörungen von Maschinenteilen führen können. Weiterhin zieht der mehrkanalige Aufbau durch den vergrößerten Hardware-Aufwand eine Erhöhung der System- als auch der Wartungskosten nach sich.

Aus DE 198 15 150 A1 ist ein System bekannt, welches eine an den Bus angeschlossene Auswerteeinheit umfaßt, die fortlaufend die über das Bussystem übertragenen Signale abhört und nur bei fehlerfreier Identifizierung von über das Bussystem übertragenen Kodierungen ein Arbeitsgerät in Betrieb setzt. Hierzu werden die durch den Busteilnehmer an den Master gesendeten Eingangsdaten ausgewertet und im Ansprechen auf die Auswertung das Arbeitsgerät eingeschaltet oder ausgeschaltet belassen.

Ein derartiger Ansatz ist im Vergleich zur erstbeschriebenen Anlage nicht so kostenintensiv, er ist jedoch sehr unflexibel im Hinblick auf eine Erweiterung des Systems oder eine Anpassung der Anlage an andere Buskomponenten. Weiterhin ist die Auswerteeinheit allein für das Auslösen einer sicherheitsgerichteten Funktion zuständig, so daß zur Einhaltung hoher Sicherheitsanforderungen die Auswerteeinheit zwingend redundant ausgeführt werden muß.

Aufgabe der Erfindung ist es somit, ein sicherheitsbezogenes Automatisierungsbussystem bereitzustellen, welches möglichst mit einer geringen Hardware-Redundanz auskommt und flexibel an die jeweiligen Anfordernisse angepaßt werden kann.

Die Erfindung löst dieses Problem mit einem Automatisierungsbussystem mit den Merkmalen des Anspruchs 1 sowie ein Verfahren zum Betrieb einer derartigen Steuer- und Datenverarbeitungsanlage nach Anspruch 14. Weiterbildungen der Erfindung sind in den Unteransprüchen angegeben.

Erfindungsgemäß umfaßt das Automatisierungssystem ein Bussystem, daran angeschlossene Sensor- und Aktor-Busteilnehmer und eine Standardsteuerungseinrichtung, welche die Prozeßsteuerung mit der Verarbeitung von prozeßgebundenen E/A-Daten und eine sicherheitsbezogene Steuerung mit der Verarbeitung von sicherheitsbezogenen Daten, d.h. der Steuerung von sicherheitsbezogenen Ein- und Ausgängen, durchführt. Weiterhin ist ein sogenannter Sicherheitsanalysator umfaßt, der mittels einer entsprechenden Schnittstelle an den Bus angeschlossen ist und den Datenfluß über den Bus mithört, wobei der Analysator zum Ausführen von sicherheitsbezogenen Funktionen eingerichtet ist. Dies betrifft beispielsweise die Ansteuerung eines Schützes zum Abschalten der Versorgungsspannung von Systemkomponenten oder die Ermittlung von Qualitätsdaten. Derartige Qualitätsdaten können allgemeine Systemparameter, z.B. Daten über das Auftreten von Fehlern in Systemkomponenten oder Busübertragungsfehlern umfassen. Das Automatisierungssystem zeichnet sich dadurch aus, daß die Standardsteuereinrichtung zumindest einen sicherheitsbezogenen Ausgang über den Bus ansteuert, sie kann jedoch auch selbst einen derartigen sicherheitsbezogenen Ausgang aufweisen. Erfindungsgemäß bezeichnet ein sicherheitsbezogener Ausgang eine Senke einer Sicherheitsinformation, die in Abhängigkeit der Information sicherheitsgerichtete Abläufe startet, beispielsweise eine Maschine herunterfährt oder gar durch Unterbrechen des Versorgungsstromes eine Maschine abschaltet. Der Sicherheitsanalysator ist im erfindungsgemäßen Automatisierungssystem zur Überprüfung und/oder zum Verarbeiten von sicherheitsbezogenen Daten, insbesondere sicherheitsbezogenen Verknüpfungsdaten im Busdatenstrom ausgebildet. Dabei sind sicherheitsbezogene Verknüpfungsdaten beispielsweise Daten, welche die sicherheitsbezogene Steuerung nach der Verarbeitung von sicherheitsbezogenen Daten an sicherheitsbezogene Ausgänge sendet.

Damit wird ein System bereitgestellt, welches extrem flexibel auf die jeweiligen Anforderungen an das Automatisierungssystem eingestellt werden kann. Beispielsweise kann jeder Sicherheitsbuskomponente ein derartiger Sicherheitsanalysator zugeordnet oder auch ein Sicherheitsanalysator in die Sicherheitskomponente, beispielsweise einen Sicherheitsbusteilnehmer selbst integriert werden, es ist jedoch auch möglich, daß ein einzelner Sicherheitsanalysator die Verarbeitung sicherheitsbezogener Daten oder die Überprüfung der sicherheitsbezogenen Verknüpfungsdaten im Busdatenstrom für mehrere Sicherheitsbuskomponenten oder gar alle Sicherheitsbuskomponenten des Systems vornimmt.

Das Prinzip der Erfindung beruht auf der Erkenntnis des Erfinders, daß die in heutigen Automatisierungsanlagen eingesetzte Elektronik selbst nur selten ausfällt. Die Integration der aktuellen digitalen Sicherheitstechnik in die Automatisierungstechnik in Form von Sicherheitssteuerungen oder Sicherheitsbussystemen nach dem Stand der Technik hat häufig den Nachteil einer abnehmenden Verfügbarkeit des Systems. Um diese Ausfallzeiten zu reduzieren, kommen deshalb neben den genannten Sicherheitskomponenten auch Verfügbarkeitsstrukturen zum Einsatz, die ihrerseits aber zu einer nicht unerheblichen Zunahme der Kosten durch den erhöhten Hardware-Aufwand führen.

Die Erfindung setzt deshalb auf der Zuverlässigkeit heutiger Automatisierungssysteme auf und integriert eine reine Notfall-Elektronik bzw. -Software, die erst dann aktiv in den Betrieb der Anlage eingreift, wenn die Standardtechnik fehlerhaft arbeitet. Die Standardsteuerungseinrichtung verarbeitet deshalb auch sicherheitsbezogene Daten, d.h. sie steuert sicherheitsrelevante Ein- und Ausgänge. Insbesondere die erzeugten sicherheitsbezogenen Verknüpfungsdaten im Busdatenstrom werden jedoch vom Sicherheitsanalysator abgehört und überprüft. Dies hat für den Anwender den Vorteil, daß eine strikte Trennung der Sicherheitstechnik und der Standardtechnik bei der Programmierung nicht mehr unbedingt notwendig ist. Das erfindungsgemäße Automatisierungssystem ist auf alle Systeme mit einem Bus, insbesondere auf Bussysteme mit Master-Slave-Buszugriffsverfahren anwendbar. Unabhängig von der Anordnung des Sicherheitsanalysators im Fernbus-Abschnitt kann dieser bei einem beispielhaften seriellen Bussystem nach EN 50 254 alle IN-Daten auf dem Bus lesen, der Umfang der mithörbaren OUT-Daten hängt jedoch von der Anordnung des Sicherheitsanalysators im System ab. Die Bezeichnung Busdatenstrom bezeichnet dabei erfindungsgemäß alle über dem Bus übermittelte Informationen, insbesondere auch die in einem Summenrahmen über den Bus transportierten Daten.

Um den einschlägigen Sicherheitsanforderungen zu genügen, kann der Sicherheitsanalysator im Ansprechen auf die Überprüfung und/oder die Verarbeitung von sicherheitsbezogenen Daten, insbesondere von Verknüpfungsdaten im Busdatenstrom, die notwendigen sicherheitsbezogenen Funktionen auslösen. Hierbei kann der Sicherheitsanalysator sowohl auf OUT-Daten, d.h. Verknüpfungsdaten der Standardsteuereinrichtung reagieren als auch auf IN-Daten, d.h. Informationen im Busdatenstrom, welche von einzelnen E/A-Busteilnehmern an die Standardsteuereinrichtung gesendet wurden.

Um einen Fehler in sicherheitsbezogenen Verknüpfungsdaten, welche über den Bus transportiert werden, zu erkennen, kann der Sicherheitsanalysator eine frei programmierbare Logikeinrichtung aufweisen, in welcher die abgehörten Daten, insbesondere die abgehörten sicherheitsbezogenen Daten verarbeitet werden. Auf diese Weise kann der Sicherheitsanalysator durch das Nachbilden der sicherheitsbezogenen Verknüpfungen der Standardsteuerung deren als OUT-Daten über den Bus gesendeten Verknüpfungsdaten überprüfen und im Ansprechen auf die Überprüfung oder den Vergleich notwendige sicherheitsbezogene Funktionen ausführen. Um die Anlage beispielsweise in einen sicheren Zustand zu bringen, kann der Sicherheitsanalysator einen Ausgang umfassen, über welchen eine Baugruppe, insbesondere ein Busteilnehmer des Automatisierungsbussystems ein- oder ausschaltbar ist. Die Abschaltung kann durch Trennen von der Spannungsversorgung realisiert werden. Um zusammenhängende bzw. voneinander abhängende Busteilnehmer in Gesamtheit in einen sicheren Zustand zu bringen, kann der Sicherheitsanalysator zur Abschaltung eines Busstichs, einer mehrere, einander zugeordnete Busteilnehmer umfassende Sicherheitsinsel oder zum Abschalten von Komponenten nach einer im Analysator abgelegten Verrieglungslogik eingerichtet sein. Es ist jedoch auch möglich, daß über den sicherheitsbezogenen Ausgang des Sicherheitsanalysators die Gesamtanlage von der Spannungsversorgung abgetrennt wird.

Der Sicherheitsanalysator kann sicherheitsbezogene Informationen neben dem Abhören des Busses weiterhin über einen direkten Eingang erfassen, mittels welchem der Sicherheitsanalysator mit einer sicherheitsbezogenen Einrichtung des Automatisierungsbussystems verbunden ist. Diese Einrichtung kann dabei, muß aber nicht an den Bus angeschlossen sein. Beispielsweise umfaßt die so zugängliche sicherheitsbezogene Information die Momentandrehzahl der schon erwähnten Drehmaschine, wobei der Analysator im Falle des Überschreitens einer vorbestimmten Grenzdrehzahl die Maschine mittels ihres Ausgangs abschaltet.

Um eine Trennung der sicherheitsbezogenen Informationen und der Prozeßdaten im System und insbesondere in der Steuerung durchzuführen, kann das Bussystem über eine Anschaltbaugruppe mit einem Host verbunden sein, wobei die prozeßbezogene Steuerung der Standardsteuereinrichtung im Host und die sicherheitsbezogene Steuerung der Standardsteuereinrichtung in der Anschaltbaugruppe angeordnet ist. Vorteilhafterweise läßt sich die sicherheitsbezogene Steuerung beispielsweise in Form von Software-Funktionsbausteinen, welche die notwendigen Verknüpfungen der sicherheitsrelevanten E/A-Informationen vornehmen, realisieren.
Die sicherheitsbezogene Steuerung kann somit in gleicher Weise implementiert werden wie die Prozeßsteuerung. Bei der Codierung der sicherheitsbezogenen Verknüpfungen ist der Programmierer ebenso wie bei der Prozeßsteuerung von der verwendeten Programmiersprache unabhängig.

Die Verknüpfungen auf dem Sicherheitsanalysator haben in etwa denselben Umfang wie die Verknüpfungen auf dem Host beziehungsweise auf der Anschaltbaugruppe und können entweder in derselben oder aber in einer anderen Programmiersprache erstellt werden. Der Sicherheitsanalysator führt zusätzlich einen Vergleich der Verknüpfungen zwischen den Ergebnissen des Host-Systems beziehungsweise der Anschaltbaugruppe und seinen eigenen durch und startet beispielsweise beim Auftreten von Ungleichheit sicherheitsgerichtete Funktionen.

Das Abnahmeverfahren eines solchen Systems kann erheblich einfacher erfolgen, als es bei den Systemen nach dem Stand der Technik der Fall ist. Die Anlage kann mit allen Sicherheitsverriegelungen in Betrieb genommen werden, ohne die Sicherheitstechnik aktiv geschaltet zu haben. Die notwendigen Verknüpfungen befinden sich dabei im Host-System oder in der Anschaltbaugruppe. Die Funktionsfähigkeit der Anlage kann zunächst im Black-Box-Test untersucht werden. In einem zweiten Schritt wird dann die Sicherheitstechnik in Form der beziehungsweise des Sicherheitsanalysators(en) zugeschaltet. Da dort nur die Sicherheitsverknüpfungen, nicht aber die Prozeßdatenverknüpfungen vorhanden sind, läßt sich nun der White-Box-Test schnell und übersichtlich durchführen, wodurch sich die Abnahmezeiten erheblich reduzieren lassen. Da die sicherheitsbezogenen Verknüpfungsalgorithmen auch auf dem Host-System beziehungsweise der Anschaltbaugruppe ablaufen, ist ein Vergleich mit denen des Analysators schnell möglich.

Wird der Bus als serieller Ringbus, beispielsweise als Bus gemäß EN 50254 ausgebildet, und ist ein Sicherheitsanalysator im Top-Level-Fernbus-Abschnitt des Automatisierungssystems angeordnet, so hat dieser Zugriff auf alle IN-Daten des Systems, da in dem bezeichneten System die Daten in einer hin- und in einer rückführenden Übertragungsleitung durch jeden Busteilnehmer geführt werden. Damit ist der Analysator in der Lage, ein auf die IN-Daten und die ihm zugänglichen Out-Daten beschränktes Prozeßabbild aufzubauen.

Bei Bussystemen mit Linientopologie kann der Sicherheitsanalysator in der Regel an jedem Ort im Bussystem alle Information mitlesen und damit ein vollständiges Prozeßabbild anlegen.

In einer vorteilhaften Ausführungsform der Erfindung ist der Sicherheitsanalysator in einem seriellen Ringbussystem direkt nach dem Host oder der Anschaltbaugruppe angeordnet, so daß dieser ein vollständiges Prozeßabbild aufbauen kann. Somit ist der Sicherheitsanalysator in der Lage jederzeit und in vollem Umfang sicherheitsgerichtete Daten, insbesondere sicherheitsgerichtete Verknüpfungsdaten auf ihre Richtigkeit zu überprüfen beziehungsweise zu verarbeiten, da in diesem Fall der Analysator Zugriff auf alle In- und Out-Daten, d.h. alle Eingangs- und Ausgangsdaten besitzt.

Ist der Sicherheitsanalysator in der Anschaltbaugruppe des beschriebenen seriellen Ringbussystems angeordnet, so kann die Funktion des Sicherheitsanalysators mittels einer Softwarekomponente in der Anschaltbaugruppe ausgeführt sein. Vorteilhafterweise weist die Anschaltbaugruppe hierbei einen sicherheitsbezogenen Ausgang auf, um entsprechende sicherheitsgerichtete Funktionen, beispielsweise das Abschalten einer Versorgungsspannung mittels eines Schützes auszuführen.

Das Ausführen derartiger sicherheitsgerichteter Funktionen kann jedoch in einer besonderen vorteilhaften Ausführungsform der Erfindung durch direkte Datenmanipulation des Busdatenstroms durch den Sicherheitsanalysatord realisiert werden. Das Manipulieren umfaßt das Umschreiben, das Ergänzen, das Einfügen sowie das Substituieren sowohl von OUT-Daten als auch von IN-Daten des Busdatenstroms. Bei Kenntnis des Prozeßabbildes kann somit der Sicherheitsanalysator in weitreichender Form auf den Betrieb des erfindungsgemäßen Automatisierungssystems Einfluß nehmen und damit sicherstellen, daß die Anlage zu jedem Zeitpunkt in definierten Zuständen gehalten werden kann. Das Prinzip der Datenmanipulation kann weiterhin auch dazu benutzt werden, um einen in einem im Busstich angeordneten Sicherheitsanalysator im allgemeinen nicht zugängliche Busdatenstromanteile verfügbar zu machen, indem ein im Fernbus angeordneter Sicherheitsanalysator die betreffenden Daten in Daten wandelt, welche in den betreffenden Busstich transportiert werden. Auf diese Weise ist eine direkte Datenverbindung zwischen Sicherheitsanalysatoren realisiert.

Die Datenmanipulation durch einen Sicherheitsanalysator kann in einem nach dem Master-Slave-Prinzip arbeitenden Bussystem auch verwendet werden, um Daten zwischen zumindest zwei Slaves, insbesondere zwischen einzelnen Busteilnehmern, mittels einer Punkt-zu-Punkt-Verbindung über wenigstens einen Sicherheitsanalysator zu übertragen, wobei der Sicherheitsanalysator Daten im Busdatenstrom umkopiert. Der Master ist bei dieser Daten-Verbindung je nach Lage der beiden Slaves im Bussystem unter Umständen nicht eingebunden, so daß der Datentransport völlig unabhängig vom Busmaster realisiert wird. Eine derartige Datenverbindung zwischen zwei Slaves ist im übrigen auch durch die Ausführung einer Kopierfunktion durch den Busmaster möglich. Während bei einem Sicherheitsanalysator als Mittler, wie vorstehend beschrieben, zumindest in bestimmten Fällen der Busmaster nicht in den Datentransport eingebunden ist, ist der Busmaster für die zweite Form einer Punkt-zu-Punkt-Verbindung zwischen zwei Slaves zwingend notwendig.

Das Austauschen von Daten zwischen zumindest zwei Slaves, beispielsweise zwischen einzelnen Busteilnehmern, mittels einer Punkt-zu-Punkt-Verbindung kann weiterhin auch durch die Einbindung des Masters oder der Steuerung in die Übertragung realisiert werden, wobei in diesem Fall der Master bzw. die Steuerung die Daten im Busdatenstrom umkopiert.

Zur Erhöhung der Datensicherheit können die sicherheitsbezogenen Daten in einem Sicherheitsprotokoll über den Bus übertragen werden. Beispielsweise kann das Sicherheitsprotokoll zusätzlich zu dem Sicherheitsdatum das negierte Sicherheitsdatum, eine laufende Nummer, eine Adresse und/oder eine Datensicherungsinformation (CRC) umfassen.

Die Flexibilität des Systems zeigt sich insbesondere in einer weiteren vorteilhaften Ausführungsform der Erfindung, bei welcher das erfindungsgemäße Automatisierungssystem mehrere Sicherheitsanalysatoren umfaßt, wobei in einem Sicherheitsanalysator ablaufende sicherheitsbezogene Verknüpfungen redundant in wenigstens einem weiteren Sicherheitsanalysator durchgeführt werden und durch beide Sicherheitsanalysatoren zumindest teilweise die gleichen Sicherheitsfunktionen ausgeführt und ausgelöst werden. Dabei können die betreffenden Sicherheitsanalysatoren zusätzlich zu den redundanten, d.h. auf beiden Analysatoren ablaufenden Verknüpfungen auch unterschiedliche sicherheitsbezogenen Verknüpfungen ausführen.

Die Erfindung wird im folgenden durch das Beschreiben einiger Ausführungsformen unter Zugrundelegen der Zeichnungen erläutert, wobei
- Fig. 1: in einer Prinzipdarstellung eine erste Ausführungsform des erfindungsgemäßen Automatisierungssystems mit zwei Sicherheitsanalysatoren im Fernbus-Abschnitt zeigt,
- Fig. 2: in einer Prinzipskizze eine weitere Ausführungsform der Erfindung darstellt, wobei ein Sicherheitsanalysator direkt hinter der Anschaltbaugruppe angeordnet ist,
- Fig. 3: das erfindungsgemäße Automatisierungssystem in einer Prinzipskizze mit einem in die Anschaltbaugruppe integrierten Sicherheitsanalysator sowie einem zweiten Sicherheitsanalysator am Kopf eines Busstichs zeigt,
- Fig. 4: ein erfindungsgemäßes Automatisierungssystem mit zwei Sicherheitsanalysatoren darstellt, wobei deren Ausgänge miteinander verbunden sind,
- Fig. 5: in einer prinzipiellen Blockbilddarstellung einen Sicherheitsanalysator mit verschiedenen Ein- und Ausgängen zeigt und
- Fig. 6a und 6b: in einer Prinzipdarstellung die Datenmanipulation des Busdatenstroms durch den Sicherheitsanalysator zeigt.

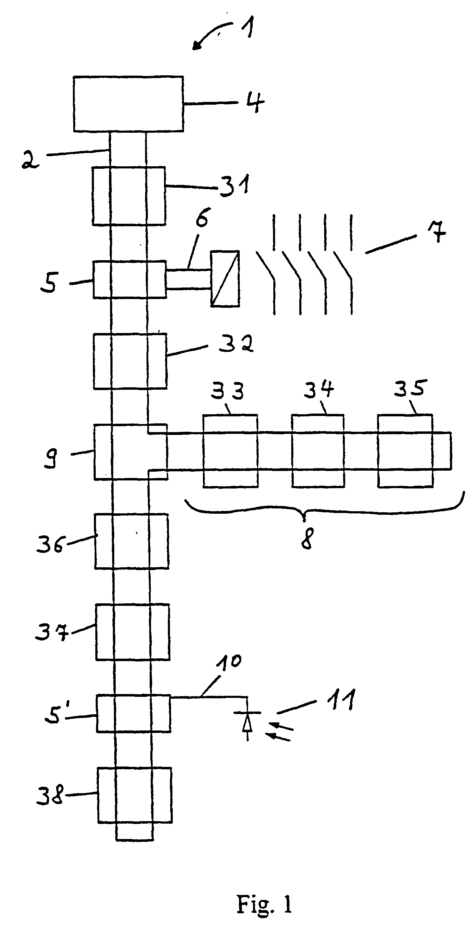

In Fig. 1 ist in einer Prinzipdarstellung das erfindungsgemäße Automatisierungssystem 1, d.h. eine Steuerund Datenübertragungsanlage gemäß der Erfindung dargestellt. Es umfaßt einen Bus 2, an welchen E/A-Busteilnehmer mit zugeordneten Sensoren und Aktoren angeschlossen sind. Eine Standardsteuerungseinrichtung 4 führt über den Bus die Prozeßsteuerung mit der Verarbeitung von prozeßgebundenen E/A-Daten durch. Hierzu empfängt die Steuerung 4 Daten von den einzelnen Busteilnehmern 31 - 38, die wiederum selbst von der Standardsteuerungseinrichtung Daten empfangen. Weiterhin ist die Standardsteuerungseinrichtung mit der Verarbeitung von sicherheitsbezogenen Daten befaßt. In diesem Sinne übernimmt die Standardsteuerungseinrichtung neben den prozeßgebundenen Ein- und Ausgängen auch die Verarbeitung der sicherheitsrelevanten Ein- und Ausgänge. Gemäß der Erfindung bezeichnet ein sicherheitsbezogener Eingang eine Informationsquelle, wobei die durch die Quelle abgegebene Information in irgendeinem Zusammenhang zur Sicherheit des erfindungsgemäßen Automatisierungssystems steht.
Beispielsweise ist der Drehzahlsensor einer Drehmaschine, welche über einen Busteilnehmer 32 an den Bus 2 angeschlossen ist, ein derartiger sicherheitsrelevanter Eingang, da die Maschine nicht über eine vorgegebene Grenze drehen darf. Ein weiteres Beispiel für einen sicherheitsbezogenen Eingang in der beschriebenen Ausführungsform der Erfindung ist ein Photodetektor einer Lichtschranke, mit welcher der Arbeitsbereich der Drehmaschine überwacht wird. Auch in diesem Fall besitzt die Standardsteuerungseinrichtung über den Bus Zugriff auf die Information des sicherheitsbezogenen Eingangs. Nach der Verarbeitung der sicherheitsbezogenen Daten, beispielsweise in Form einer logischen Verknüpfung sendet die Steuerungseinrichtung 4 diese sicherheitsbezogenen Verknüpfungsdaten an sicherheitsbezogene Ausgänge. Beispielsweise kann die Standardsteuerungseinrichtung einen Abschaltbefehl für die erwähnte Drehmaschine über den Bus zum zugeordneten Busteilnehmer 32 absenden, wenn die Höchstdrehzahl überschritten wurde und damit eine Gefahr besteht, daß die Anlage außer Kontrolle gerät. Auch in diesem Fall kommuniziert die sicherheitsbezogene Steuerung in der Standardsteuerungseinrichtung über den Bus mit dem sicherheitsbezogenen Ausgang.

Das erfindungsgemäße Automatisierungssystem umfaßt ferner zwei Sicherheitsanalysatoren 5, 5', welche jeweils mittels einer Schnittstelle den Datenfluß über das Bussystem in Echtzeit mithören. Die Sicherheitsanalysatoren sind zum Verknüpfen und/oder Verarbeiten von sicherheitsbezogenen Daten im Busdatenstrom eingerichtet. Dies bedeutet, daß sie sicherheitsbezogene Verknüpfungen der Standardsteuerungseinrichtung nachvollziehen können, da ihnen die über den Bus transportierten sicherheitsbezogenen Daten zugänglich sind.

Hierzu weisen die Sicherheitsanalysatoren 5, 5' jeweils eine frei programmierbare Logikeinrichtung auf, in welcher die abgehörten Daten, insbesondere die abgehörten sicherheitsbezogenen Daten verarbeitet werden. Beispielsweise können die Sicherheitsanalysatoren 5, 5' durch Nachbilden der sicherheitsbezogenen Verknüpfungen der Standardsteuerung deren als Ausgangsdaten über den Bus gesendeten Verknüpfungsdaten überprüfen. In vorliegendem Fall beziehen sich die sicherheitsbezogenen Verknüpfungen auf einen. einzelnen Busteilnehmer 32. In diesem Fall ist der Sicherheitsanalysator 5 für die sicherheitsbezogenen Ein- bzw. Ausgänge, welche diesen Busteilnehmer zugeordnet sind, zuständig. In der in Fig. 1 dargestellten Ausführungsform der Erfindung sind die Sicherheitsanalysatoren 5 bzw. 5' keine logischen Busteilnehmer des Automatisierungssystems. Der Sicherheitsanalysator 5 weist jedoch einen sicherheitsbezogenen Ausgang 6 auf, über welchen der dem Sicherheitsanalysator zugeordnete Busteilnehmer 32 ausgeschaltet werden kann. Dies geschieht mittels einer Schaltung eines Schützes 7, welcher den Busteilnehmer bzw. die angeschlossenen Baugruppen und Maschinen von der Versorgungsspannung trennt. Auf diese Weise führt der Sicherheitsanalysator 5 im Ansprechen auf die Überprüfung oder den Vergleich eine sicherheitsbezogene Funktion, hier das Abschalten der Versorgungsspannung aus. Wenn beispielsweise ein Fehler der sicherheitsbezogenen Verknüpfungsdaten aus der Standardsteuereinrichtung erkannt wird, kann der Sicherheitsanalysator über den beschriebenen Ausgang den betroffenen Busteilnehmer abschalten, da die sicherheitsbezogene Steuerung durch die Standardsteuerungseinrichtung nicht mehr vorgabegemäß arbeitet. In ähnlicher Weise wird ein Busteilnehmer abgeschaltet, wenn die sicherheitsbezogene Steuerung nicht notwendige Daten an den Busteilnehmer sendet und infolgedessen Gefahr besteht, daß die Anlage in einen undefinierten Zustand gerät.

In der beschriebenen Ausführungsform ist über einen Buskoppler 9 ein Lokalbusstich 8 mit drei Busteilnehmern 33, 34 und 35 angeordnet. Diese Busteilnehmer sind von der Funktionfähigkeit und vom Betrieb des Busteilnehmers 32 abhängig, welcher dem Sicherheitsanalysator 5 zugeordnet ist. Demnach ist es notwendig, beim Abschalten des Busteilnehmers 32 auch die Busteilnehmer des Lokalbusstichs 8 von der Versorgungsspannung zu trennen. Diese Verrieglungslogik ist im Sicherheitsanalysator 5 abgelegt. Somit sind insgesamt vier Busteilnehmer mit ihren nachgeordneten Baugruppen und Maschinen abzuschalten, was in Fig. 1 schematisch durch einen Vierfach-Schütz 7 dargestellt ist.

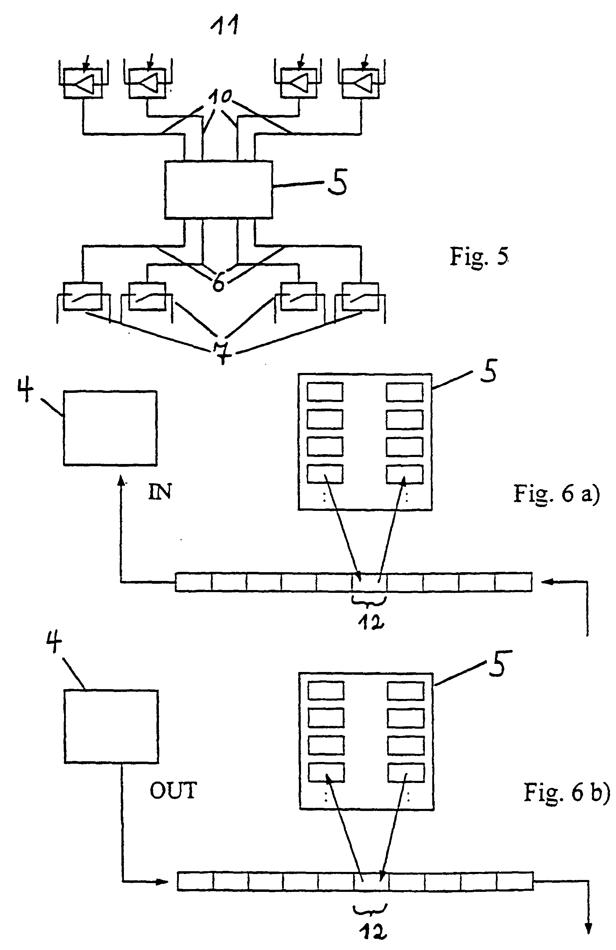

Der Sicherheitsanalysator 5' ist wie der erste Sicherheitsanalysator 5 zum Abhören der über den Bus transportierten Daten eingerichtet. Im Gegensatz zum ersten Sicherheitsanalysator 5 weist er jedoch keinen Ausgang auf, mit welchem er sicherheitsbezogene Funktionen ausführen kann. Statt dessen umfaßt er einen sicherheitsbezogenen Eingang 10, über welchen der Sicherheitsanalysator mit einer sicherheitsbezogenen Einrichtung 11 des Automatisierungssystems zur Erfassung von sicherheitsbezogenen Daten verbunden ist. Im vorliegenden Fall umfaßt diese Einrichtung 11 einen Photodetektor, welcher als Teil einer Lichtschranke den Arbeitsbereich eines Schweißroboters überwacht. Der Sensor ist nicht mittels eines Busteilnehmers an den Automatisierungsbus angeschlossen, sondern direkt an den Sicherheitsanalysator 5'. Im Ansprechen auf die über den sicherheitsbezogenen Eingang 10 des Sicherheitsanalysators 5' erfaßten sicherheitsbezogenen Daten führt auch hier der Sicherheitsanalysator eine sicherheitsbezogene Funktion aus. Wird durch den Photodetektor 11 das Eindringen einer Person in den Arbeitsbereich des Roboters erfaßt, so schaltet der Sicherheitsanalysator 5' den entsprechenden Busteilnehmer 38 und seine zugeordneten Baugruppen und den Roboter selbst aus. Hierzu weist der Sicherheitsanalysator 5' eine Einrichtung zum Manipulieren der auf den Bus übertragenen Eingangs- und Ausgangsdaten auf. Dabei kann zumindest ein Datum des Datenstroms überschrieben, gelöscht und/oder zumindest ein Datum in den Busdatenstrom eingefügt werden. Ein derartiger Vorgang ist in den Fig. 6a und 6b veranschaulicht. Diese Figuren zeigen das Veränden von Eingangs- bzw. Ausgangsdaten der Standardsteuereinrichtung 4 durch den Sicherheitsanalysator 5'. In beiden Fällen wird eine Informationseinheit 12 in einen Speicher des Sicherheitsanalysators eingelesen und daraufhin an die entsprechende Stelle des Datenstroms eine aus einem anderen Speicher des Sicherheitsanalysators entnommene Informationseinheit eingeschrieben. Die Abschaltung des Busteilnehmers und der daran angeschlossenen Baugruppen und damit des Roboters kann sowohl über die Manipulation der Eingangsdaten als auch über die Manipulation der Ausgangsdaten der Standardsteuereinrichtung vorgenommen werden. Wird beispielsweise der Eingangsdatenstrom derartig verändert, daß der Standardsteuerungseinrichtung 4 ein Betriebsparameter außerhalb der vorgegebenen Grenzen gemeldet wird, so schaltet die Standardsteuerungseinrichtung über den Bus mittels eines dem bestimmten Busteilnehmer 38 übermittelten sicherheitsbezogenen Verknüpfungsdatums diesen Busteilnehmer und damit den Schweißroboter ab. In gleicher Weise kann der Sicherheitsanalysator eine Freigabe durch Standardsteuereinrichtung mittels Überschreiben des entsprechenden Ausgangsdatums rückgängig machen.

Fig. 6b zeigt den Fall, daß der Sicherheitsanalysator den Ausgangsdatenstrom auf dem Bus verändert. In diesem Fall manipuliert der Sicherheitsanalysator die an den Busteilnehmer 38 gesendeten Daten derartig, daß der Busteilnehmer seinen Ausgang und damit auch den Schweißroboter abschaltet.

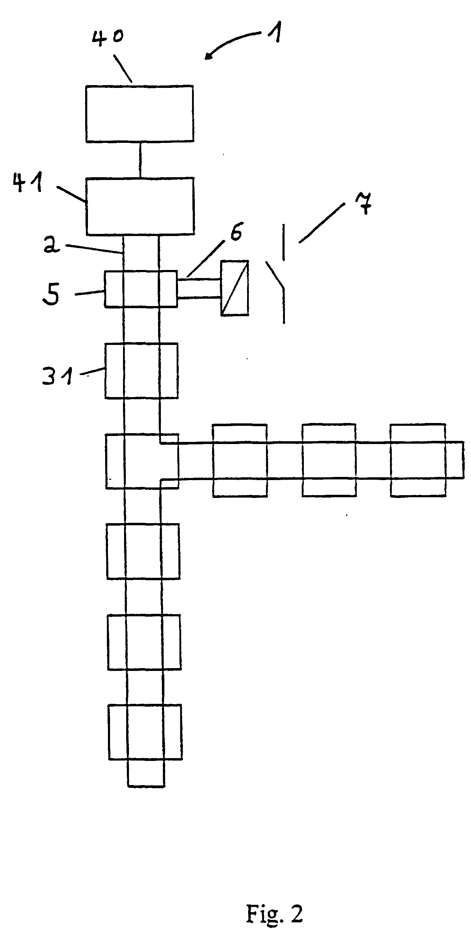

Fig. 2 zeigt eine weitere Ausführungsform der Erfindung. Dabei ist der Bus ein nach dem Master-Slave-Prinzip arbeitendes System, wobei die Standardsteuerungseinrichtung als Master und die einzelnen Busteilnehmer als Slaves fungieren. Das Bussystem ist über eine Anschaltbaugruppe 41 mit einem Host 40 verbunden, wobei die prozeßbezogene Steuerung im Host und die sicherheitsbezogene Steuerung in der Anschaltbaugruppe angeordnet ist bzw. abläuft. Die Anlage umfaßt einen einzelnen Sicherheitsanalysator 5, der direkt hinter die Anschaltbaugruppe zum Abhören des Busdatenstroms an dem Bus angekoppelt ist. Durch diese Maßnahme wird sichergestellt, daß der Sicherheitsanalysator an dem seriellen Bus mit Ringstruktur den gesamten Eingangs- als auch den gesamten Ausgangs-Datenstrom auf dem Bus abhören kann. Aufgrund der Erkenntnis des gesamten Datenstroms über den Bus legt der Sicherheitsanalysator 5 in der beschriebenen Ausführungsform ein vollständiges Prozeßabbild in einem dafür vorgesehenen Speicher ab. Demzufolge ist der Sicherheitsanalysator in der Lage, die Gesamtheit der sicherheitsbezogenen Verknüpfungsdaten der sicherheitsbezogenen Steuerung in der Anschaltbaugruppe zu überprüfen und bei Bedarf, d.h. beim Auftreten eines Fehlers, den Ausgang 6 zum Abschalten der Gesamtanlage mittels des Schützes 7 sicherheitsgerichtet derart anzusteuern, daß die Versorgungsspannung für die Gesamtanlage ausgeschaltet wird.

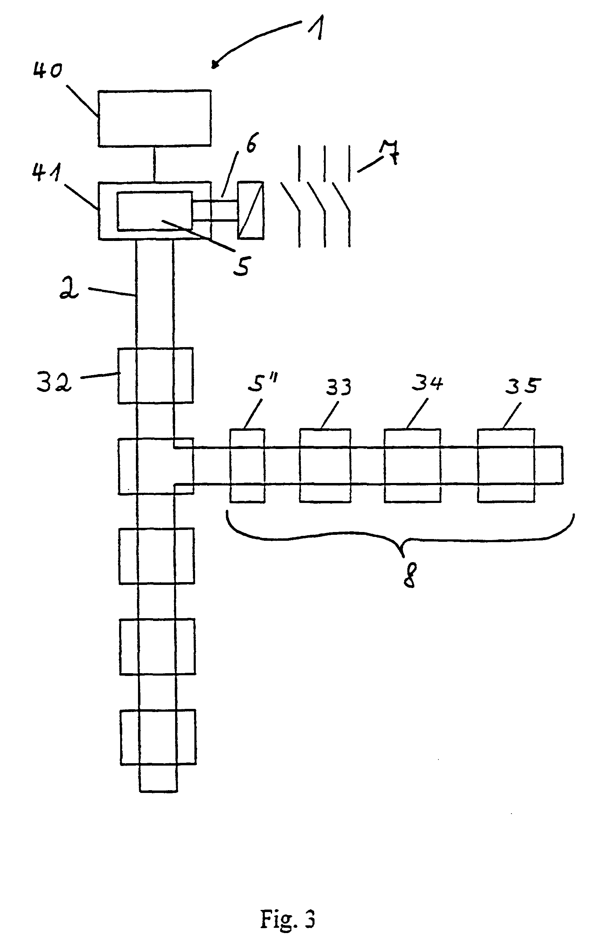

Eine Modifikation der in Fig. 2 dargestellten Ausführungsform zeigt das erfindungsgemäße Automatisierungssystem in Fig. 3. Der Sicherheitsanalysator 5 ist hier in die Anschaltbaugruppe 41 integriert. Die sicherheitsbezogene Steuerung der Standardsteuerungseinrichtung als auch die sicherheitsbezogene Datenverarbeitung des Sicherheitsanalysators laufen in der Anschaltbaugruppe in getrennten und unabhängigen Logikbausteinen ab. Weiterhin ist ein zweiter Sicherheitsanalysator 5" am Kopf des Lokalbusstichs 8 angeordnet. Diese Anordnung bedingt wiederum, daß der Sicherheitsanalysator 5" die Gesamtheit aller Eingangs- als auch der Ausgangsdaten für die Busteilnehmer 33, 34 und 35 des Lokalbusstich 8 abhören kann und demgemäß ein vollständiges Prozeßabbild für den Prozeßablauf innerhalb des Lokalbusstichs anzulegen. Der Sicherheitsanalysator 5" ist somit wie der Sicherheitsanalysator 5 im Fernbus-Abschnitt in der Lage, die Gesamtheit der sicherheitsbezogenen Verknüpfungsdaten der sicherheitsbezogenen Steuerung für den Lokalbusabschnitt in der Anschaltbaugruppe zu überprüfen und bei Bedarf wie oben stehend beschrieben, über eine Datenmanipulation die notwendigen sicherheitsbezogenen Funktionen auszulösen. Auf diese Weise lassen sich höchste Sicherheitsanforderungen, die an die im Busstich 8 vorliegenden sicherheitsrelevanten Einund Ausgänge gestellt sind, erfüllen, da der Lokalbusstich 8 sowohl durch die sicherheitsbezogene Steuerung der Standardsteuereinrichtung als auch durch den Sicherheitsanalysator 5 und durch den Sicherheitsanalysator 5" abgesichert ist.

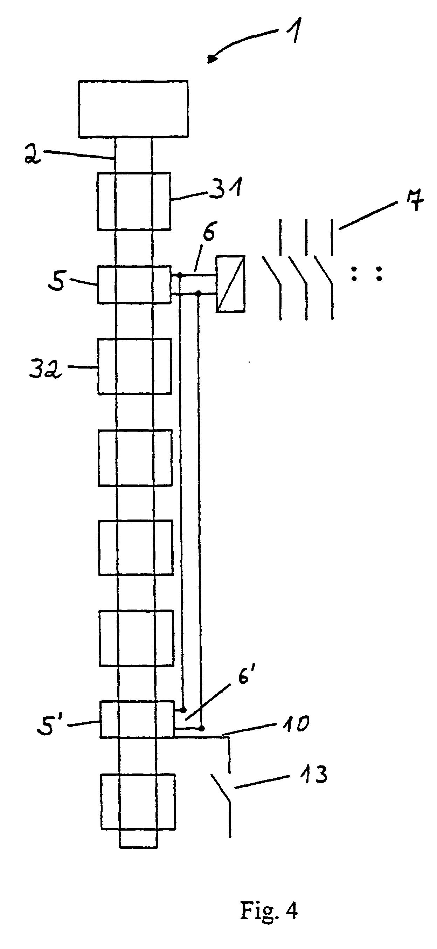

Eine weitere Ausführungsform der Erfindung zeigt Fig. 4. Das erfindungsgemäße Automatisierungssystem umfaßt zwei Sicherheitsanalysatoren 5 und 5', deren sicherheitsbezogenen Ausgänge 6 und 6' miteinander gekoppelt sind. Beide Ausgänge steuern eine Vielfach-Schützeinrichtung 7 zum Abschalten der Versorgungsspannung für das Gesamtsystem. Die Anlage wird durch eine Standardsteuerungseinrichtung 4 über den seriellen Bus 2 gesteuert. Der Sicherheitsanalysator 5 kann aufgrund seiner Anordnung im System die Gesamtheit aller Eingangs- und Ausgangsdaten auf dem Bus abhören, ausgenommen die Eingangsdaten des ersten Busteilnehmers 31, der zwischen der Steuerungseinrichtung 4 und dem Sicherheitsanalysator 5 angeordnet ist. Der Sicherheitsanalysator 5' kann alle Eingangsdaten am Bus abhören, alle Ausgangsdaten außer die für den letzten Busteilnehmers sind ihm jedoch nicht zugänglich. Der erste Sicherheitsanalysator 5 ist deshalb durch Umkopieren der betreffenden Daten im Busdatenfluß in der Lage, die ihm zugänglichen Ausgangsdaten in Eingangsdaten umzukopieren und somit die dem Sicherheitsanalysator 5' eigentlich nicht zugänglichen Ausgangsdaten zum Anlegen eines Prozeßabbildes für den abzusichernden sicherheitsbezogenen Busteilnehmer 32 auch dem Sicherheitsanalysator 5' verfügbar zu machen. Da beide Sicherheitsanalysatoren dieselbe Eingangsinformation erhalten, können sie sich im Hinblick auf die sicherheitsbezogenen Ein- bzw. Ausgänge des abzusichernden Busteilnehmers 32 überwachen. Auf diese Weise ist eine verteilte Redundanz der Sicherheitstechnik im erfindungsgemäßen Automatisierungssystem realisiert. Im vorliegenden Beispiel weist der Sicherheitsanalysator 5' weiterhin einen sicherheitsbezogenen Eingang 10 auf, an welchen ein Notschalter 13 angeschlossen ist. Auf das Schließen des Notschalters 13 spricht der Sicherheitsanalysator 5' mit der im Sicherheitsanalysator zugeordneten sicherheitsbezogenen Funktion an, nämlich dem Öffnen des Schützes 7 zur Abschaltung der Gesamtanlage.

Das beschriebene Verfahren des Umkopierens von Eingangsdaten in Ausgangsdaten und umgekehrt wird erfindungsgemäß auch dazu benutzt, um eine Datenverbindung in dem nach dem Master-Slave-Prinzip arbeitenden Automatisierungssystem zwischen zwei Slaves zu realisieren ohne daß der Master für die Datenübermittlung benötigt wird. Hierbei kann beispielsweise ein einem Busteilnehmer zugeordneter Sicherheitsanalysator das zu übermittelnde Datum des Busteilnehmers in den Eingangs-Datenstrom einfügen und somit einem nachfolgenden Busteilnehmer ohne die Beanspruchung des Masters zur Verfügung stellen. Auf diese Weise läßt sich bei Bedarf auch auf einfache Weise ein Multi- oder Broadcast der Information zu allen übrigen nachfolgenden Busteilnehmern verwirklichen.

In einer nichtdargestellten Ausführungsform der Erfindung ist der Sicherheitsanalysator in einem zugeordneten sicherheitsgerichteten Busteilnehmer integriert. Die sicherheitsgerichteten Verknüpfungen laufen dabei in einer Logikeinheit des Busteilnehmers ab, somit läßt sich im Busteilnehmer eingebaute Intelligenz für die sicherheitsgerichteten Verknüpfungen nutzen. Da der Busteilnehmer eine Busschnittstelle aufweist, veringert sich der zusätzliche Hardwareaufwand für den Sicherheitsanalysator beträchtlich.

Bei der Datenübertragung in den beschriebenen erfindungsgemäßen Automatisierungssystemen werden zumindest teilweise die sicherheitsbezogenen Daten in einem Sicherheitsprotokoll über den Bus übertragen. Dieses Sicherheitsprotokoll kann je nach Anforderung zusätzlich zum Sicherheitsdatum das negierte Sicherheitsdatum, eine Adresse und/oder eine Datensicherungsinformation in Form eines CRC umfassen. Auf diese Weise lassen sich Fehler bei der Datenübertragung leicht erkennen. Zu diesem Zweck wird ein im erfindungsgemäßen Automatisierungssystem verwendeter Sicherheitsanalysator derartig eingerichtet, daß er das Sicherheitsprotokoll lesen und entsprechend auswerten kann.

Mittels der im Sicherheitsprotokoll übertragene Adresse des Sicherheitsbusteilnehmers kann der Sicherheitsanalysator bei geändertem Busaufbau, beispielsweise durch sicherheitsbezogene Abschaltung der Komponente, eine Anpassung der Programmierung vornehmen bzw. den Datensatz des ihm zugeordneten Teilnehmers erkennen und die Veränderung des Busaufbaus berücksichtigen. Zusätzlich kann durch die Aufnahme der Adresse in das Sicherheitsprotokoll ein Ablagefehler durch einen Busfehler oder einen Ausfall einer dezentralen Einheit erfaßt werden.

Eine besondere Ausführungsform eines Sicherheitsanalysators zur Verwendung im erfindungsgemäßen Automatisierungssystem zeigt Fig. 5. Der dargestellte Sicherheitsanalysator 5 weist sowohl 4 sicherheitsgerichtete Eingänge 10 zur Erfassung sicherheitsgerichteter Information von Photodetektoren 11 als auch 4 sicherheitsgerichtete Ausgänge 6 zum Abschalten der Versorgungsspannung von 4 Automatisierungsbuskomponenten durch Schütze auf. Die verschiedenen sicherheitsgerichteten Ausgänge 6 werden dabei im Ansprechen auf die im Sicherheitsanalysator ablaufenden Verknüpfungen, den Vergleich mit sicherheitsgerichteten Verknüpfungen der Standardsteuerung und/oder eine sicherheitsbezogene Eingangsinformation über den Eingang 10 angesteuert. Hierbei ist eine Verrieglungslogik im Sicherheitsanalysator abgelegt, die vorgibt, welche sicherheitsgerichteten Funktionen beim Auftreten eines bestimmten Fehlers ausgelöst werden, d.h. welche Komponenten beim Auftreten des Fehlers von der Versorgungsspannung abgetrennt werden müssen.

Es liegt im Rahmen der Erfindung, daß ein Sicherheitsanalysator neben der Verarbeitung von sicherheitsbezogenen Daten auch eine Prozeßdatenverarbeitung durchführt.

Weiterhin ist festzuhalten, daß das Prinzip der Erfindung nicht auf die in den Ausführungsbeispielen dargestellten Automatisierungsbussysteme beschränkt ist, sondern statt dessen auf alle Automatisierungsanlagen mit einem Bus angewendet werden kann.

## Patentansprüche

1. Automatisierungssystem (1),
umfassend zumindest
- ein Bussystem (2),
- daran angeschlossene E/A-Busteilnehmer (31-38) und
- eine Standardsteuerungseinrichtung (4; 40, 41), sowie
- wenigstens einen Sicherheitsanalysator (5, 5', 5"), welcher den Datenfluß über das Bussystem mithört und zum Ausführen zumindest einer sicherheitsbezogenen Funktion ausgebildet ist,
**dadurch gekennzeichnet, daß**
der Sicherheitsanalysator zum Überprüfen und Verarbeiten von sicherheitsbezogenen Daten im Busdatenstrom eingerichtet ist und
eine Einrichtung zum Manipulieren des auf dem Bus (2) übertragenen Datenstroms aufweist.

2. Automatisierungssystem (1) nach Anspruch 1,
**dadurch gekennzeichnet,**
**daß** durch die Standardsteuerungseinrichtung zumindest ein sicherheitsbezogener Ausgang gesteuert wird.

3. Automatisierungssystem (1) nach Anspruch 1 oder 2,
**dadurch gekennzeichnet, daß** der Sicherheitsanalysator (5, 5', 5") eine frei programmierbare Logikeinrichtung aufweist, welche die abgehörten Daten, insbesondere die abgehörten sicherheitsbezogenen Daten verarbeitet.

4. Automatisierungssystem (1) nach einem der Ansprüche 1 bis 3,
**dadurch gekennzeichnet, daß**
der Sicherheitsanalysator (5, 5', 5") kein logischer Busteilnehmer des Automatisierungssystems (1) ist und dieser zumindest einen sicherheitsbezogenen Ausgang (6) aufweist, über welchen wenigstens eine dem Sicherheitsanalysator zugeordnete Baugruppe des Automatisierungssystems, insbesondere wenigstens ein Busteilnehmer (31-38), ein- oder ausschaltbar ist.

5. Automatisierungssystem (1) nach Anspruch 4**,**
**dadurch gekennzeichnet, daß**
der Sicherheitsanalysator (5, 5', 5") zur Abschaltung einer Sicherheitsinsel, eines Busstichs (8) und/oder der Gesamtanlage eingerichtet ist.

6. Automatisierungssystem (1) nach einem der Ansprüche 1 bis 5,
**dadurch gekennzeichnet, daß**
der Sicherheitsanalysator (5') zumindest einen sicherheitsbezogenen Eingang (10) aufweist, über welchen der Sicherheitsanalysator mit einer sicherheitsbezogenen Einrichtung (11) des Automatisierungssystem zur Erfassung von sicherheitsbezogenen Daten verbunden ist.

7. Automatisierungssystem (1) nach einem der Ansprüche 1 bis 6, **dadurch gekennzeichnet, daß**
das Bussystem (2) über eine Anschaltbaugruppe (41) mit einem Host (40) verbunden ist,
wobei die prozeßbezogene Steuerung im Host und die sicherheitsbezogene Steuerung in der Anschaltbaugruppe angeordnet ist.

8. Automatisierungssystem (1) nach einem der Ansprüche 1 bis 7, **dadurch gekennzeichnet, daß**
der Bus (2) ein serieller Bus ist und zumindest ein Sicherheitsanalysator (5, 5') im Fernbus-Abschnitt des Automatisierungssystems angeordnet ist.

9. Automatisierungssystem (1) nach Anspruch 8,
**dadurch gekennzeichnet, daß**
ein Sicherheitsanalysator (5) direkt nach dem Host (40) oder der Anschaltbaugruppe (41) angeordnet ist.

10. Automatisierungssystem (1) nach einem der Ansprüche 1 bis 9, **dadurch gekennzeichnet, daß**
ein Sicherheitsanalysator (5) in der Anschaltbaugruppe (41) angeordnet ist.

11. Automatisierungssystem (1) nach einem der vorstehenden Ansprüche 1 bis 10, **dadurch gekennzeichnet, daß** der Sicherheitsanalysator (5, 5', 5") eine Speichereinrichtung zum Anlegen eines Prozeßabbildes umfaßt.

12. Automatisierungssystem (1) nach einem der vorstehenden Ansprüche 1 bis 11,
**dadurch gekennzeichnet, daß**
der Sicherheitsanalysator (5, 5', 5") eine Einrichtung zum Manipulieren des auf dem Bus (2) übertragenen Eingangs- und/oder Ausgangsdaten aufweist.

13. Automatisierungssystem (1) nach Anspruch 12,
**dadurch gekennzeichnet, daß**
die Einrichtung im Sicherheitsanalysator (5, 5', 5") Eingangs- und/oder Ausgangsdaten überschreibt und/oder Daten in den Datenstrom einfügt.

14. Automatisierungssystem (1) nach einem der vorstehenden Ansprüche 1 bis 13,
**dadurch gekennzeichnet, daß**
zumindest ein Sicherheitsanalysator (5, 5', 5") redundant aufgebaut ist.

15. Verfahren zum Betrieb eines Automatisierungssystems, insbesondere eines Automatisierungssystems (1) nach einem der Ansprüche 1 bis 14, wobei
durch eine Standardsteuerungseinrichtung (4; 40, 41), eine Prozeßsteuerung mit der Verarbeitung von prozeßgebundenen E/A-Daten und eine sicherheitsbezogene Steuerung mit der Verarbeitung von sicherheitsbezogenen Daten durchgeführt wird und weiterhin eine Verarbeitung sicherheitsbezogener Daten auf zumindest einem Sicherheitsanalysator (5, 5', 5") durchgeführt wird, wobei im Sicherheitsanalysator sicherheitsbezogene Daten, insbesondere sicherheitsbezogene Verknüpfungsdaten im Busdatenstrom verarbeitet werden,
**dadurch gekennzeichnet, daß**
der Sicherheitsanalysator (5', 5") mittels einer Einrichtung zum Manipulieren des Datenstroms auf dem Bus (2) zumindest ein Datum des Datenstroms überschreibt, löscht und/oder zumindest ein Datum in den Bus-Datenstrom einfügt.

16. Verfahren nach Anspruch 15,
**dadurch gekennzeichnet, daß** die Standardsteuerungseinrichtung zumindest einen sicherheitsbezogenen Ausgang steuert.

17. Verfahren nach Anspruch 15 oder 16,
**dadurch gekennzeichnet, daß**
in einem Sicherheitsanalysator (5, 5', 5") ein Vergleich der über den Bus übertragenen sicherheitsbezogenen Verknüpfungsdaten der Standardsteuerungseinrichtung (4, 41) und/oder zumindest eines weiteren Sicherheitsanalysators (5, 5', 5") mit den entsprechenden Verknüpfungsdaten des ersten Sicherheitsanalysators durchgeführt wird.

18. Verfahren nach einem der Ansprüche 15 bis 17,
**dadurch gekennzeichnet, daß**
die durch die Standardsteuerung (4, 41) erzeugten und als Ausgangsdaten über den Bus gesendeten Verknüpfungsdaten in zumindest einem Sicherheitsanalysator (5, 5', 5") durch Nachbilden der sicherheitsbezogenen Verknüpfungen der Standardsteuerung (4, 41) überprüft werden.

19. Verfahren nach einem der Ansprüche 15 bis 18,
**dadurch gekennzeichnet, daß**
im Ansprechen auf die Überprüfung oder den Vergleich durch den Sicherheitsanalysator (5, 5', 5") sicherheitsbezogene Funktionen ausgeführt werden.

20. Verfahren nach einem der Ansprüche 15 bis 19,
**dadurch gekennzeichnet, daß**
das Ausführen einer sicherheitsbezogenen Funktionen über einen sicherheitsbezogenen Ausgang (6) des Sicherheitsanalysators (5, 5', 5") erfolgt.

21. Verfahren nach einem der Ansprüche 15 bis 20,
**dadurch gekennzeichnet, daß**
im Ansprechen auf die über den sicherheitsbezogenen Eingang (10) des Sicherheitsanalysators (5') erfaßten sicherheitsbezogenen Daten der Sicherheitsanalysator sicherheitsbezogene Funktionen ausführt.

22. Verfahren nach Anspruch 21 ,
**dadurch gekennzeichnet, daß** das Ausführen einer sicherheitsbezogenen Funktion das Ein- oder Ausschalten zumindest einer Baugruppe des Automatisierungsbussystems, insbesondere eines Busteilnehmers (32-38) umfaßt.

23. Verfahren nach einem der Ansprüch 15 bis 22,
**dadurch gekennzeichnet, daß**
der Sicherheitsanalysator (5, 5', 5") den abgehörten Datenstrom zumindest teilweise abspeichert und Eingangsdaten des Bus-Datenstroms in Ausgangsdaten des Bus-Datenstroms, und umgekehrt, umkopiert.

24. Verfahren nach einem der Ansprüche 15 bis 23,
**dadurch gekennzeichnet, daß** sicherheitsbezogenen Daten in einem Sicherheitsprotokoll über den Bus (2) übertragen werden.

25. Verfahren nach Anspruch 24,
**dadurch gekennzeichnet, daß**
das Sicherheitsprotokoll zusätzlich zum Sicherheitsdatum das negierte Sicherheitsdatum, eine laufende Nummer, eine Adresse und/oder eine Datensicherungsinformation (CRC) umfaßt.

26. Verfahren nach einem der Ansprüche 15 bis 25,
**dadurch gekennzeichnet, daß**
der Bus ein nach dem Master-Slave-Prinzip arbeitendes System ist, wobei Daten zwischen zumindest zwei Slaves, insbesondere zwischen einzelnen Busteilnehmern (31-38), mittels einer Daten-Verbindung über wenigstens einen Sicherheitsanalysator (5, 5', 5") übertragen werden, wobei der Sicherheitsanalysator Daten im Busdatenstrom umkopiert.

27. Verfahren nach einem der Ansprüche 15 bis 26,
**dadurch gekennzeichnet, daß**
der Bus ein nach dem Master-Slave-Prinzip arbeitendes System ist, wobei Daten zwischen zumindest zwei Slaves, insbesondere zwischen einzelnen Busteilnehmern (31-38), mittels einer Daten-Verbindung über die Steuerung oder den Master übertragen werden, wobei die Steuerung bzw. der Master Daten im Busdatenstrom umkopiert.

28. Verfahren nach einem der Ansprüche 15 bis 27,
**dadurch gekennzeichnet, daß**
mittels eines Sicherheitsanalysators (5, 5', 5") Qualitätsdaten erzeugt und/oder eine Aufbereitung der gelesenen Daten zur weiteren Verarbeitung durchgeführt werden.

29. Verfahren nach einem der Ansprüche 15 bis 28,
**dadurch gekennzeichnet, daß**
die in einem Sicherheitsanalysator (5') ablaufenden sicherheitsbezogenen Verknüpfungen zumindest teilweise redundant in wenigstens einem weiteren Sicherheitsanalysator (5") durchgeführt und durch beide Sicherheitsanalysatoren zumindest teilweise die gleichen Sicherheitsfunktionen ausgeführt werden.

30. Verfahren nach einem der Ansprüche 15 bis 29,
**dadurch gekennzeichnet, daß**
ein Sicherheitsanalysator zumindest teilweise auch eine Prozeßdatenverarbeitung durchführt.

## Claims

1. An automation system (1) comprising at least:
- a bus system (2),
- connected thereto input/output bus subscribers (31 - 38) and
- a standard control device (4; 40, 41)
and
- at least one safety analyser (5, 5', 5"), which monitors the data stream through the bus system and is constructed to carry out at least one safety-related function,
**characterised in that**
the safety analyser is arranged to check and process safety-related data in the bus data stream and comprises a means of manipulating the data stream transmitted on the bus (2).

2. An automation system (1) according to claim 1, **characterised in that** at least one safety-related output is controlled by the standard control device.

3. An automation system (1) according to claim 1 or 2, **characterised in that** the safety analyser (5, 5', 5") comprises a freely programmable logic device which processes the monitored data, particularly the monitored safety-related data.

4. An automation system (1) according to any one of claims 1 to 3, **characterised in that** the safety analyser (5, 5', 5") is not a logic bus subscriber of the automation system (1) and the latter comprises at least one safety-related output (6) via which at least one assembly of the automation system associated with the safety analyser, particularly at least one bus subscriber (31 - 38), can be switched on or off.

5. An automation system (1) according to claim 4, **characterised in that** the safety analyser (5, 5', 5") is arranged to switch off a safety island, a bus branch (8) and/or the complete installation.

6. An automation system (1) according to any one of claims 1 to 5, **characterised in that** the safety analyser (5') comprises at least one safety-related input (10) via which the safety analyser is connected to a safety-related device (11) of the automation system for detecting safety-related data.

7. An automation system (1) according to any one of claims 1 to 6, **characterised in that** the bus system (2) is connected to a host (40) via a connection assembly (41), the process-related control being disposed in the host and the safety-related control being disposed in the connection assembly.

8. An automation system (1) according to any one of claims 1 to 7, **characterised in that** the bus (2) is a serial bus and at least one safety analyser (5, 5') is disposed in the remote bus section of the automation system.

9. An automation system (1) according to claim 8, **characterised in that** a safety analyser (5) is disposed directly after the host (40) or the connection assembly (41).

10. An automation system (1) according to any one of claims 1 to 9, **characterised in that** a safety analyser (5) is disposed in the connection assembly (41).

11. An automation system (1) according to any one of the preceding claims 1 to 10, **characterised in that** the safety analyser (5, 5', 5") comprises a memory device for applying a process image.

12. An automation system (1) according to any one of the preceding claims 1 to 11, **characterised in that** the safety analyser (5, 5', 5") comprises a device for manipulating the input and/or output data transmitted on the bus (2).

13. An automation system (1) according to claim 12, **characterised in that** the device in the safety analyser (5, 5', 5") overwrites input and/or output data and/or inserts data into the data stream.

14. An automation system (1) according to any one of the preceding claims 1 to 13, **characterised in that** at least one safety analyser (5, 5', 5'') is of redundant construction.

15. A method of operating an automation system, particularly an automation system (1) according to any one of claims 1 to 14, wherein by means of a standard control device (4; 40, 41), a process control is carried out with the processing of process-linked input/output data and a safety-related control with the processing of safety-related data and also a processing of safety-related data is carried out on at least one safety analyser (5, 5', 5"), wherein safety-related data in the safety analyser, particularly safety-related logic operations data, are processed in the bus data stream, **characterised in that** the safety analyser (5', 5"), by means of a device for manipulating the data stream on the bus (2), overwrites, erases at least one datum in the data stream and/or inserts at least one datum into the bus data stream.

16. A method according to claim 15, **characterised in that** the standard control device controls at least one safety-related output.

17. A method according to claim 15 or 16, **characterised in that** in a safety analyser (5, 5', 5") there is carried out a comparison of the safety-related logic operations data of the standard control device (4, 41) as transmitted over the bus and/or of at least one other safety analyser (5, 5', 5") with the corresponding logic operations data of the first safety analyser.

18. A method according to any one of claims 15 to 17, **characterised in that** the logic operations data produced by the standard control (4, 41) and transmitted as output data via the bus is checked in at least one safety analyser (5, 5', 5") by simulation of the safety-related logic operations of the standard control (4, 41).

19. A method according to any one of claims 15 to 18, **characterised in that** safety-related functions are carried out in response to the check or the comparison by the safety analyser (5, 5', 5").

20. A method according to any one of claims 15 to 19, **characterised in that** the performance of a safety-related function is carried out via a safety-related output (6) of the safety analyser (5, 5', 5").

21. A method according to any one of claims 15 to 20, **characterised in that** the safety analyser carries out safety-related functions in response to the safety-related data detected via the safety-related input (10) of the safety analyser (5').

22. A method according to claim 21, **characterised in that** the performance of a safety-related function comprises switching on or off at least one assembly of the automation bus system, particularly a bus subscriber (32 - 38).

23. A method according to any one of claims 15 to 22, **characterised in that** the safety analyser (5, 5', 5") at least partially stores the monitored data stream and recopies input data of the bus data stream into output data of the bus data stream and vice-versa.

24. A method according to any one of claims 15 to 23, **characterised in that** safety-related data are transmitted in a safety protocol via the bus (2).

25. A method according to claim 24, **characterised in that** the safety protocol comprises in addition to the safety datum the negated safety datum, a serial number, an address and/or a data security information (CRC).

26. A method according to any one of claims 15 to 25, **characterised in that** the bus is a system operating on the master-slave principle, wherein data are transmitted between at least two slaves, particularly between individual bus subscribers (31 - 38), by means of a data connection via at least one safety analyser (5, 5', 5"), the safety analyser recopying data in the bus data stream.

27. A method according to any one of claims 15 to 26, **characterised in that** the bus is a system operating on the master-slave principle, wherein data are transmitted between at least two slaves, particularly between individual bus subscribers (31 - 38), by means of a data connection via the control or the master, the control or the master recopying data in the bus data stream.

28. A method according to any one of claims 15 to 27, **characterised in that** by means of a safety analyser (5, 5', 5") quality data are generated and/or preparation of the read data for further processing is carried out.

29. A method according to any one of claims 15 to 28, **characterised in that** the safety-related logic operations taking place in a safety analyser (5') are carried out at least partially redundantly in at least one other safety analyser (5") and at least partially the same safety functions are performed by the two safety analysers.

30. A method according to any one of claims 15 to 29, **characterised in that** a safety analyser also carries out a process data processing at least partially.

## Revendications

1. Système d'automatisation (1) comprenant au moins :
- un système de bus (2),
- des usagers d'entrée-sortie (31 à 38) du bus qui y sont raccordés et
- un dispositif standard de commande (4 ; 40, 41) ainsi que
- au moins un analyseur de sécurité (5, 5', 5") qui écoute le flux de données passant dans le système de bus et qui est conçu pour exécuter au moins une fonction relative à la sécurité,
**caractérisé en ce que** l'analyseur de sécurité servant à contrôler et à traiter des données relatives à la sécurité est installé dans le flot de données de bus et comporte un dispositif de manipulation du flot de données transmis sur le bus (2).

2. Système d'automatisation (1) selon la revendication 1, **caractérisé en ce qu'**au moins une sortie relative à la sécurité est commandée par le dispositif standard de commande.

3. Système d'automatisation (1) selon la revendication 1 ou 2, **caractérisé en ce que** l'analyseur de sécurité (5, 5', 5") comporte un dispositif logique pouvant être librement programmé, lequel traite les données écoutées, notamment les données écoutées relatives à la sécurité.

4. Système d'automatisation (1) selon l'une des revendications 1 à 3, **caractérisé en ce que** l'analyseur de sécurité (5, 5', 5") n'est pas un usager logique de bus du système d'automatisation (1) et **en ce que** celui-ci comporte au moins une sortie (6) relative à la sécurité par l'intermédiaire de laquelle au moins un sous-groupe du système d'automatisation associé à l'analyseur de sécurité, notamment au moins un usager de bus (31 à 38), peut être mis en circuit ou hors circuit.

5. Système d'automatisation (1) selon la revendication 4, **caractérisé en ce que** l'analyseur de sécurité (5, 5', 5") est conçu pour déconnecter un îlot de sécurité, un segment de bus (8) et/ou la totalité de l'installation.

6. Système d'automatisation (1) selon l'une des revendications 1 à 5, **caractérisé en ce que** l'analyseur de sécurité (5') comporte au moins une entrée relative à la sécurité (10) par l'intermédiaire de laquelle l'analyseur de sécurité est relié à un dispositif relatif à la sécurité (11) du système d'automatisation destiné à capter des données relatives à la sécurité.

7. Système d'automatisation (1) selon l'une des revendications 1 à 6, **caractérisé en ce que** le système de bus (2) est relié à un serveur (40) par l'intermédiaire d'un sous-groupe de branchement (41), la commande relative au processus étant disposée dans le serveur et la commande relative à la sécurité dans le sous-groupe de branchement.

8. Système d'automatisation (1) selon l'une des revendications 1 à 7, **caractérisé en ce que** le bus (2) est un bus série et **en ce qu'**au moins un analyseur de sécurité (5, 5') est disposé dans la section de bus éloigné du système d'automatisation.

9. Système d'automatisation (1) selon la revendication 8, **caractérisé en ce qu'**un analyseur de sécurité (5) est disposé juste après le serveur (40) ou juste après le sous-groupe de branchement (41).

10. Système d'automatisation (1) selon l'une des revendications 1 à 9, **caractérisé en ce qu'**un analyseur de sécurité (5) est disposé dans le sous-groupe de branchement (41).

11. Système d'automatisation (1) selon l'une des revendications précédentes 1 à 10, **caractérisé en ce que** l'analyseur de sécurité (5, 5', 5") comprend un dispositif formant mémoire servant à créer une image de processus.

12. Système d'automatisation (1) selon l'une des revendications précédentes 1 à 11, **caractérisé en ce que** l'analyseur de sécurité (5, 5', 5") comporte un dispositif servant à manipuler les données d'entrée et/ou les données de sortie transmises sur le bus (2)

13. Système d'automatisation (1) selon la revendication 12, **caractérisé en ce que** le dispositif écrase par surfrappe des données d'entrée et/ou des données de sortie dans l'analyseur de sécurité (5, 5', 5") et/ou les insère dans le flot de données.

14. Système d'automatisation (1) selon l'une des revendications précédentes 1 à 13, **caractérisé en ce qu'**au moins un analyseur de sécurité (5, 5', 5") est construit de manière redondante.

15. Procédé de mise en oeuvre d'un système d'automatisation, notamment d'un système d'automatisation (1) selon l'une des revendications 1 à 14, dans lequel un dispositif standard de commande (4 ; 40, 41) effectue une commande de processus comportant un traitement de données d'entrée-sortie liées au processus et une commande relative à la sécurité comportant le traitement de données relatives à la sécurité et dans lequel, en outre, un traitement des données en rapport avec la sécurité est effectué dans au moins un analyseur de sécurité (5, 5', 5"), les données relatives à la sécurité, notamment les données de chaînage relatives à la sécurité dans le flot de données de bus, étant traitées dans l'analyseur de sécurité, **caractérisé en ce que** l'analyseur de sécurité (5', 5") écrase par surfrappe au moins une donnée du flot de données, l'efface et/ou insère au moins une donnée dans le flot de données de bus, et ce, au moyen d'un dispositif de manipulation du flot de données sur le bus (2).

16. Procédé selon la revendication 15, **caractérisé en ce que** le dispositif standard de commande pilote au moins une sortie relative à la sécurité.

17. Procédé selon la revendication 15 ou 16, **caractérisé en ce qu'**il est effectué, dans un analyseur de sécurité (5, 5', 5"), une comparaison des données de chaînage relatives à la sécurité du dispositif standard de commande (4, 41) et/ou d'au moins un autre analyseur de sécurité (5, 5', 5") transmises par l'intermédiaire du bus avec les données de chaînage correspondantes du premier analyseur de sécurité.

18. Procédé selon l'une des revendications 15 à 17, **caractérisé en ce que** les données de chaînage produites par la commande standard (4, 41) et envoyées sous forme de données de départ par l'intermédiaire du bus sont contrôlées dans au moins un analyseur de sécurité (5, 5', 5") en reproduisant les chaînages relatifs à la sécurité de la commande standard (4, 41).

19. Procédé selon l'une des revendications 15 à 18, **caractérisé en ce que** des fonctions relatives à la sécurité sont réalisées en réponse au contrôle ou à la comparaison par l'analyseur de sécurité (5, 5', 5").

20. Procédé selon l'une des revendications 15 à 19, **caractérisé en ce que** l'exécution d'une fonction relative à la sécurité a lieu par l'intermédiaire d'une sortie relative à la sécurité (6) de l'analyseur de sécurité (5, 5', 5").

21. Procédé selon l'une des revendications 15 à 20, **caractérisé en ce que**, en réponse aux données relatives à la sécurité captées par l'intermédiaire de l'entrée relative à la sécurité (10) de l'analyseur de sécurité (5'), l'analyseur de sécurité exécute des fonctions relatives à la sécurité.

22. Procédé selon la revendication 21, **caractérisé en ce que** l'exécution d'une fonction relative à la sécurité comprend la mise en circuit ou hors circuit d'au moins un sous-groupe du système de bus d'automatisation, notamment d'un usager de bus (32 à 38).

23. Procédé selon l'une des revendications 15 à 22, **caractérisé en ce que** l'analyseur de sécurité (5, 5', 5") mémorise au moins partiellement le flot de données lues et transcrit des données d'entrée du flot de données de bus en données de sortie du flot de données de bus, et vice versa.

24. Procédé selon l'une des revendications 15 à 23, **caractérisé en ce que** des données relatives à la sécurité sont transmises dans un protocole de sécurité par l'intermédiaire du bus (2).

25. Procédé selon la revendication 24, **caractérisé en ce que**, en plus de la donnée de sécurité, le protocole de sécurité comprend : la donnée de sécurité inversée, un numéro courant, une adresse et/ou une information de protection des données (CRC, contrôle de redondance cyclique).

26. Procédé selon l'une des revendications 15 à 25, **caractérisé en ce que** le bus est un système fonctionnant selon le principe du maître et de l'esclave, auquel cas des données sont transmises entre au moins deux esclaves, notamment entre différents usagers de bus (31 à 38), au moyen d'une liaison de données par l'intermédiaire d'au moins un analyseur de sécurité (5, 5', 5"), l'analyseur de sécurité transcrivant des données dans le flot de données de bus.

27. Procédé selon l'une des revendications 15 à 26, **caractérisé en ce que** le bus est un système fonctionnant selon le principe maître-esclave, des données étant transmises entre au moins deux esclaves, notamment entre des usagers de bus individuels (31 à 38), au moyen d'une liaison de données par l'intermédiaire de la commande ou du maître, la commande ou le maître transcrivant des données dans le flot de données de bus.

28. Procédé selon l'une des revendications 15 à 27, **caractérisé en ce que**, au moyen d'un analyseur de sécurité (5, 5', 5"), des données de qualité sont produites et/ou une préparation des données lues est effectuée en vue d'un traitement complémentaire.

29. Procédé selon l'une des revendications 15 à 28, **caractérisé en ce que** les chaînages relatifs à la sécurité se déroulant dans un analyseur de sécurité (5') sont effectués au moins en partie de manière redondante dans au moins un autre analyseur de sécurité (5") et **en ce que** les mêmes fonctions de sécurité sont au moins partiellement exécutées par les deux analyseurs de sécurité.

30. Procédé selon l'une des revendications 15 à 29, **caractérisé en ce qu'**un analyseur de sécurité effectue également, au moins partiellement, un traitement de données de processus.
